# EUROPÄISCHE PATENTSCHRIFT

(11) **EP 3 652 770 B1**
(45) Veröffentlichungstag und Bekanntmachung des Hinweises auf die Patenterteilung: **08.07.2020**
(21) Anmeldenummer: 19722117.9
(22) Anmeldetag: 06.05.2019
(51) Int. Cl.: H01H 13/08, H01H 13/52, A47J 19/04

(54) **BETÄTIGUNGSEINHEIT FÜR EIN HAUSHALTSGERÄT**
ACTUATION UNIT FOR A HOUSEHOLD APPLIANCE
UNITÉ D'ACTIONNEMENT POUR UN APPAREIL MÉNAGER

(30) Priorität: 15.05.2018 DE 102018207507
(43) Veröffentlichungstag der Anmeldung: 20.05.2020
(73) Patentinhaber: De'Longhi Braun Household GmbH, 63263 Neu-Isenburg (DE)
(72) Erfinder: DEXHEIMER, Christian, 63225 Langen (DE)
(74) Vertreter: Hoffmann Eitle
(86) Internationale Anmeldenummer: PCT/EP2019/061537
(87) Internationale Veröffentlichungsnummer: WO 2019/219429

(56) Entgegenhaltungen:
- EP-A1- 3 054 825
- EP-A1- 3 138 450
- DE-A1-102008 040 934

## Beschreibung

### Technisches Gebiet

Die Erfindung betrifft eine Betätigungseinheit für ein Haushaltsgerät sowie ein, bevorzugt elektrisch antreibbares, Haushaltsgerät, insbesondere ein handgehaltenes Haushaltsgerät, wie einen Stabmixer, ein Rührgerät oder einen Pürierstab. Ferner betrifft die Erfindung ein Verfahren zur Montage eines Haushaltsgeräts.

### Stand der Technik

Bei bekannten Stabmixern wird eine Unterbaugruppe, umfassend einen Motor zum Antrieb des Stabmixers, eine Platine und einen den Motor und die Platine tragenden Kunststoffring, von einer Seite in ein Gehäuse des Stabmixers eingeschoben und hiernach mittels Ultraschallschweißen mit dem Gehäuse verbunden. Die Schweißverbindung wird dabei zwischen dem Kunststoffring der Unterbaugruppe und dem Gehäuse ausgebildet.

Einige Stabmixer sind dadurch gekennzeichnet, dass sie eine, dem Betätigungsweg entsprechende Geschwindigkeitseinstellung mittels eines Potentiometers aufweisen. Um diese Funktion darzustellen, wird im Zuge einer Bewegung des Betätigungsknopfs des Stabmixers sowohl der Hauptschalter gedrückt als auch das Potentiometer mit der Bewegung des Betätigungsknopfs betätigt.

Auf Grund der Vielzahl der in einem solchen Stabmixer verbauten Komponenten kommt es zu langen Toleranzketten. Die für die Fertigung zu beachtende Toleranzlücke befindet sich dabei beispielsweise systembedingt im Bereich der Betätigung beziehungsweise des Betätigungsknopfes.

Um Toleranzketten auf der Platine klein zu halten, ist es bekannt, aus einem Betätigungselement für den Hauptschalter und das Potentiometer sowie einer entsprechenden Führung eine Baugruppe zu bilden und diese Baugruppe auf der Platine zu verstiften. Dadurch wird sichergestellt, dass sowohl der Hauptschalter als auch das Potentiometer stets zuverlässig geschaltet werden können. Somit verlagert sich die Toleranzlücke auf die Schnittstelle zwischen Gehäuse und Betätigungsknopf.

Da alle Komponenten in der Kette toleranzbehaftet sind, muss der Toleranzausgleich durch ein in vertikalen Richtungen (bei Betrachtung des Stabmixers in aufrechter Ausrichtung) variierbares Bauteil bewirkt werden, das manuell ausgerichtet und anschließend mittels einer Schraubverbindung arretiert wird. Insbesondere kann der Toleranzausgleich bei der Montage des Betätigungsknopfs erreicht werden, der auf Anbauteilen der im Gehäuse aufgenommenen Platine angeordnet ist.

Der Betätigungsknopf ist mit einem, in der Richtung der größten Toleranzbewegung orientierten Langloch ausgestattet und wird nach Fertigstellung der Schweißverbindung in die Baugruppe eingesetzt und manuell auf dem auf der Platine sitzenden Betätigungselement ausgerichtet. Ist der Betätigungsknopf in Bezug zum Gehäuse ausgerichtet, wird er durch eine Schraube auf das Betätigungselement aufgeschraubt und somit fixiert.

Allerdings hat dieses Vorgehen den Nachteil, dass zur Montage eine Schraubverbindung vorgesehen werden muss. Dies führt zu einer gewissen Fehleranfälligkeit und durch die manuelle Montage mittels einer Schraube auch zu erhöhten Fertigungskosten.

Die Patentschrift EP 3 054 825 B1 offenbart eine Betätigungseinheit mit den Merkmalen des Oberbegriffs des Patentanspruchs 1.

In DE 10 2008 040 934 A1 beschreibt ein motorbetriebenes Küchengerät mit zwei Tasten zum Betreiben des Motors mit alternativen Drehzahlen, wobei das Küchengerät eine niederdrückbare erste Taste zum Betreiben des Motors bei einer ersten Drehzahl umfasst. Das Küchengerät weist eine niederdrückbare zweite Taste zum Betreiben des Motors bei einer zweiten Drehzahl auf.

Ferner ist die EP 3 138 450 A1 bekannt.

### Gegenstand der Erfindung

Die Erfindung zielt darauf ab, eine Betätigungseinheit für ein Haushaltsgerät bereitzustellen, mit der die Montage eines Haushaltsgeräts vereinfacht wird und die dazu beiträgt, die Fertigungskosten zu senken.

Der Gegenstand der Anspruchs 1 stellt eine entsprechende Betätigungseinheit bereit. Weitere bevorzugte Ausführungsformen sind in den abhängigen Ansprüchen aufgeführt und/oder nachfolgend beschrieben.

Die Betätigungseinheit ist für ein Haushaltsgerät geeignet, beispielsweise einen Stabmixer, ein Rührgerät oder einen Pürierstab, und weist auf: eine Platine, an der ein erstes Schaltelement vorgesehen ist, sowie einen Betätigungsknopf mit einer, insbesondere als Langloch ausgebildeten, Ausnehmung. Ferner ist ein Betätigungselement mit einer Betätigungselementbasis vorgesehen, wobei das Betätigungselement einen sich von der Betätigungselementbasis erstreckenden Vorsprungabschnitt aufweist, der derart in die Ausnehmung eingeführt ist, dass das Betätigungselement und der Betätigungsknopf im montierten Zustand in einer Dimension entsprechend der Erstreckung des Vorsprungabschnitts und einer weiteren Dimension jeweils einen Freiheitsgrad aufweisen.

"Im montierten Zustand" bedeutet dabei, dass der Betätigungsknopf derart zum Betätigungselement ausgerichtet ist, dass eine Betätigung des ersten Schaltelements (und ggf. eines später beschriebenen zweiten Schaltelements) durchgeführt werden kann. Insbesondere berührt der Vorsprungabschnitt einen Bereich oder zwei gegenüberliegende Bereiche der Ausnehmung.

Durch die erfindungsgemäße Anordnung wird die Montage erleichtert, da die relative Ausrichtung des Betätigungselements und des Betätigungsknopfs beim Einbringen des Betätigungsknopfs variiert werden kann, ohne die Funktion der Betätigungseinheit negativ zu beeinflussen. Somit kann ein Toleranzausgleich erreicht und daher das Montagerisiko verringert werden. Ferner entfällt eine aufwändige Verschraubung.

Die in der bevorzugten Ausführungsform genannte Ausnehmung ist als Langloch ausgebildet. Eine derartige Ausgestaltung kann auch als "gabelförmige Ausnehmung" bezeichnet werden. Durch eine derartige Ausnehmung kann der Vorsprungabschnitt im Langloch hin- und her bewegt werden.

Gemäß einer Ausführungsform ist es vorgesehen, dass das Betätigungselement einen Gleitabschnitt aufweist, wobei der Gleitabschnitt eingerichtet ist, durch eine Gleitbewegung eine Schaltkomponente des ersten Schaltelements zu betätigen.

Durch die Schaltkomponente kann beispielsweise ein Motor ein- oder ausgeschaltet werden.

Es ist bevorzugt, dass sich der Vorsprungabschnitt von einer zum Gleitabschnitt entgegengesetzten Seite des Betätigungselements erstreckt. Dies erleichtert die Montage der Vorrichtung und führt zu einer einwandfreien Bedienmöglichkeit beim Gebrauch.

In einer weiteren Variante kann der Vorsprungabschnitt als zylinderförmiger Stift ausgebildet sein. Dies erleichtert das Einführen in die Ausnehmung des Betätigungsknopfs und gewährleistet einen einwandfreien Betrieb. Dabei kann die vom der Betätigungselementbasis weg weisende Spitze des Vorsprungabschnitts kegelförmig ausgebildet sein, um die Montage weiter zu erleichtern.

Es ist bevorzugt, dass die zwei Freiheitsgrad-Richtungen des Betätigungselements und des Betätigungsknopfs senkrecht zur Betätigungsrichtung des Betätigungsknopfs ausgerichtet sind. Ist das Haushaltsgerät mit der Betätigungseinheit stehend angeordnet, so handelt es sich um vertikale und horizontale Richtungen.

Gemäß einer Ausführungsform ist es vorgesehen, dass an der Platine ein zweites Schaltelement vorgesehen ist, wobei bevorzugt ist, dass das zweite Schaltelement ein Potentiometer ist. Somit kann neben der Funktion des Ein- und Ausschaltens auch eine stufenlose Einstellung der Drehzahl des Motors vorgenommen werden.

Es ist bevorzugt, dass das Betätigungselement eingerichtet ist, das erste Schaltelement und das zweite Schaltelement zu betätigen. Somit werden in einer Betätigungsbewegung mehrere Funktionen kombiniert.

Die Erfindung betrifft ferner ein Haushaltsgerät. Das Haushaltsgerät weist einen Gehäusekörper sowie eine Betätigungseinheit gemäß einem der vorangegangenen Aspekte auf, wobei der Betätigungsknopf zum Betätigen eines Motors des Haushaltsgeräts in einem Öffnungsbereich des Gehäusekörpers aufgenommen ist. Bezüglich der Vorteile des Haushaltsgeräts wird auf die bereits erläuterten Vorteile verwiesen.

Dabei kann das Haushaltsgerät ein Stabmixer, ein Rührgerät oder ein Pürierstab sein.

Ferner betrifft die Erfindung ein Verfahren zur Montage eines Haushaltsgeräts, insbesondere eines Haushaltsgeräts gemäß einem der zuvor genannten Aspekte. Das Verfahren umfasst die Schritte gemäß Anspruch 15. Bezüglich der Vorteile des Verfahrens wird auf die bereits erläuterten Vorteile verwiesen.

### Kurze Beschreibung der Figuren

- Fig. 1: zeigt ein Haushaltsgerät gemäß der Erfindung vor dem Einführen einer Unterbaugruppe in einen Gehäusekörper des Haushaltsgeräts.
- Fig. 2: zeigt das Haushaltsgerät gemäß der Erfindung nach dem Einführen der Unterbaugruppe in den Gehäusekörper des Haushaltsgeräts.
- Fig. 3: ist eine perspektivische Schnittansicht zur Veranschaulichung des Betätigungsbereichs des Haushaltsgeräts gemäß einer ersten Ausführungsform der Erfindung.
- Fig. 4: ist eine weitere perspektivische Schnittansicht der ersten Ausführungsform zur Veranschaulichung des Betätigungsbereichs des Haushaltsgeräts, wobei ein Betätigungsknopf in einer Ausgangsstellung angeordnet ist.
- Fig. 5: ist die weitere perspektivische Schnittansicht der ersten Ausführungsform zur Veranschaulichung des Betätigungsbereichs des Haushaltsgeräts, wobei der Betätigungsknopf in einer Bestätigungsstellung angeordnet ist.
- Fig. 6: ist eine perspektivische Schnittansicht zur Veranschaulichung des Betätigungsbereichs des Haushaltsgeräts gemäß einer zweiten Ausführungsform der Erfindung.
- Fig. 7: zeigt eine Detailansicht der zweiten Ausführungsform.

### Beschreibung der bevorzugten Ausführungsform

Anhand der beigefügten Figuren werden bevorzugte Ausführungsformen der Erfindung zur Veranschaulichung beschrieben. Obwohl die beschriebene Ausführungsform nicht einschränkend, sondern rein beispielhaft ist, können Merkmale der Ausführungsformen auch einzeln zur Spezifizierung der Erfindung verwendet werden. Modifikationen bestimmter Merkmale der bevorzugten Ausführungsformen können mit Varianten anderer Merkmale kombiniert werden, um weitere Ausführungsformen auszubilden.

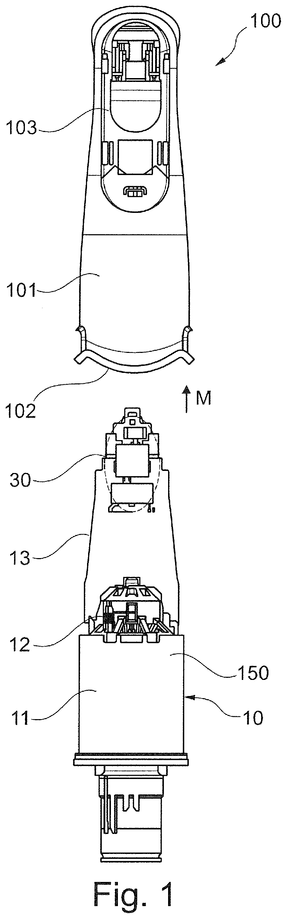

Zur Erläuterung der Ausführungsformen der Betätigungseinheit wird zunächst anhand der Figuren 1-2 ein Haushaltsgerät sowie dessen Montage erläutert.

Das Haushaltsgerät 100, gemäß der vorliegenden Ausführungsform ein Stabmixer, umfasst einen Gehäusekörper 101. Der, insbesondere im Spritzgussverfahren hergestellte, Gehäusekörper 101 umfasst eine Montageöffnung 102, in die, wie nachfolgend beschrieben, eine Baugruppe 10 in einer Montagerichtung M eingeführt werden kann. Ferner ist am Gehäusekörper 101 ein Öffnungsbereich 103 vorgesehen, in den ein Betätigungsknopf 110 eingebracht werden kann. In den Figuren 1-2 ist der Betätigungsknopf 110 noch nicht montiert.

Die in den Gehäuseköper 101 in der Montagerichtung M einzuführende Baugruppe 10 umfasst ein Trägerbauteil 11 (insbesondere Kunststoffring), an dem ein Motor 12 zum Antrieb eines Stabmixers vorgesehen ist.

Am Trägerbauteil 11 ist ferner eine Platine 13 befestigt, an der mehrere elektronische Komponenten vorgesehen sind. Insbesondere ist an der Platine 13 ein Hauptschalter 14 (erstes Schaltelement) angebracht, wobei der Hauptschalter 14 eine Schaltkomponente 14a umfasst. Ferner ist an der Platine 13 ein Potentiometer (zweites Schaltelement) 15 vorgesehen, mit dem die Drehzahl des Motors 12 eingestellt werden kann. Das Potentiometer 15 umfasst eine Schaltkomponente 15a, mit der eine entsprechende Einstellbewegung des Potentiometers 15 vorgenommen werden kann, um die Drehzahl des Motors 12 stufenlos verstellen zu können.

Bei der Montage des Haushaltsgeräts wird die Baugruppe 10 in der Montagerichtung M in die Montageöffnung 102 eingeführt, sodass ein Betätigungsbereich 30, in dem sich der Hauptschalter 14 und das Potentiometer 15 befinden, in den Abschnitt des Öffnungsbereichs 103 gelangt und somit von außerhalb des Gehäusekörpers 101 zugänglich ist.

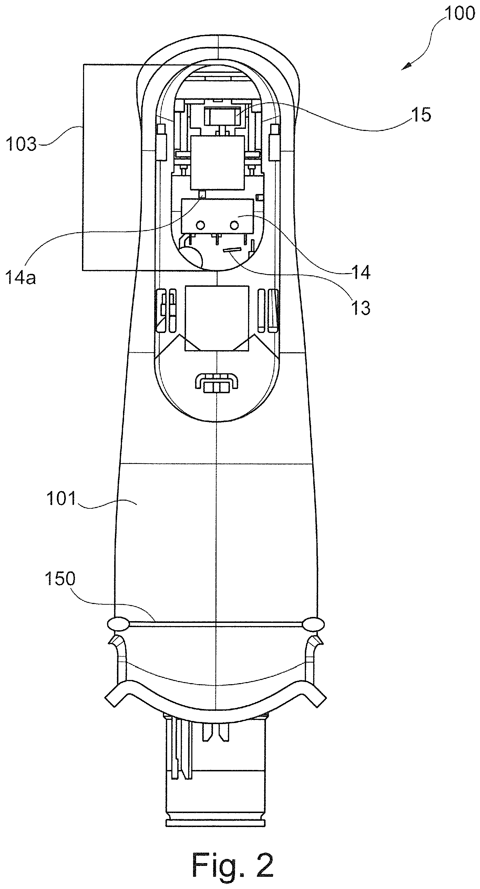

Nachdem die Baugruppe 10 in den Gehäusekörper 101 eingesetzt wurde, wird der Gehäusekörper 101 mit dem Trägerbauteil mittels einer innerhalb des Gehäusekörpers 101 liegenden Schweißnaht 150 verbunden. Die Position der Schweißnaht 150 ist in Fig. 2 veranschaulicht.

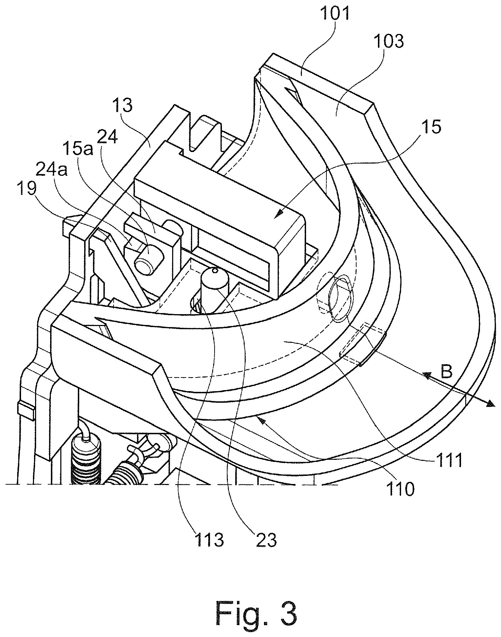

Mit Bezug auf die Fig. 3 bis 5 wird der Aufbau der Ausführungsform der Betätigungseinheit erläutert. An der Platine 13 ist eine Basis 19 befestigt, wobei die Basis 19 im Ausführungsbeispiel als Spritzgussteil ausgebildet ist. Die Basis 19 umfasst einen Verbindungsabschnitt 19a, der durch eine Öffnung in der Platine 13 geführt wird, so dass die Basis 19 an der Platine 13 fixiert werden kann. Die Basis 19 weist ferner einen Führungsabschnitt 19b auf, der im Zuge dieses Ausführungsbeispiels als im Querschnitt u-förmige Aussparung in der Basis 19 vorgesehen ist. Der Führungsabschnitt 19b erstreckt sich senkrecht zur Montagerichtung M.

Im Führungsabschnitt 19b ist ein Betätigungselement 20 aufgenommen, das entlang der Führung 19b in einer Betätigungsrichtungen B hin- und her bewegbar ist. Das Betätigungselement 20 umfasst eine Betätigungselementbasis 21, an deren in Richtung des Hauptschalters 14 weisenden Seite ein Gleitabschnitt 22 vorgesehen ist. Der Gleitabschnitt 22 ist entlang der Führung 19b und in Richtung der ersten Schaltkomponente 14a des Hauptschalters 14 bewegbar. In der zur ersten Schaltkomponente 14a weisenden Richtung weist der Gleitabschnitt 22 eine Schräge auf, so dass die erste Schaltkomponente 14a durch das Betätigungselement 20 stoßfrei gedrückt werden kann.

Ferner umfasst das Betätigungselement 20 einen Vorsprungabschnitt 23, der sich ausgehend von der Betätigungselementbasis 21 senkrecht zur durch die Betätigungselementbasis 21 ausgebildete Ebene erstreckt (entsprechend der zuvor genannten Montagerichtung M). Die von der Betätigungselementbasis 21 weg weisende Spitze des Vorsprungabschnitts 23 ist bevorzugt kegelförmig ausgebildet sein, um die Montage weiter zu erleichtern.

Der Vorsprungabschnitt 23 ist im Ausführungsbeispiel zylindrisch ausgebildet. Gemäß einer weiteren Modifikation kann der Vorsprungsabschnitt 23 jedoch auch eine andere Geometrie aufweisen, wie eine im Querschnitt rechteckige oder quadratische Gestalt.

Ferner erstreckt sich ausgehend von der Betätigungselementbasis 21 ein Eingriffsabschnitt 24. Der Eingriffsabschnitt 24 ist an der Betätigungselementbasis 21 näher zur Platine 13 ausgebildet als der Vorsprungabschnitt 23. Der Eingriffsabschnitt 24 weist einen in Richtung der Platine 13 geöffneten Aufnahmebereich 24a auf, wobei der Aufnahmebereich 24a zur Aufnahme der Schaltkomponente 15a des Potentiometers 15 vorgesehen ist.

In dem Öffnungsbereich 103 ist der Betätigungsknopf 110 derart eingesetzt, dass die gabelförmige Ausnehmung 113 des Betätigungsknopfs 110 den Vorsprungabschnitt 23 aufnimmt. Da sich der Vorsprungabschnitt 23 durch die gabelförmige Ausnehmung 113 des Betätigungsknopfs 110 erstreckt, ist es möglich, bei der Montage Toleranzen im Bereich des Betätigungsknopfs 110 auszugleichen. Der Toleranzausgleich erfolgt hierbei sowohl in der Montagerichtung M als auch in einer Richtung, die in der Ebene der oberen Seite des Betätigungselements 20 liegt.

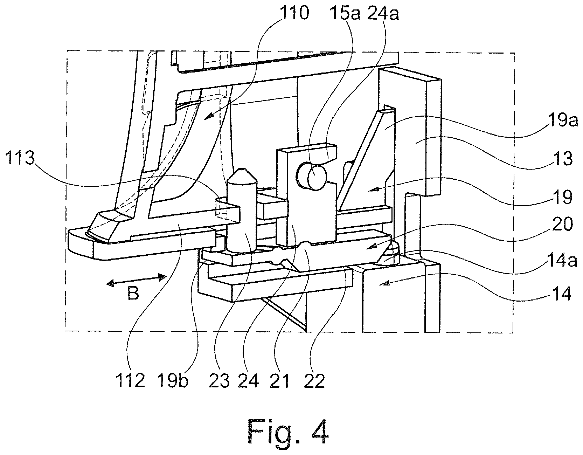

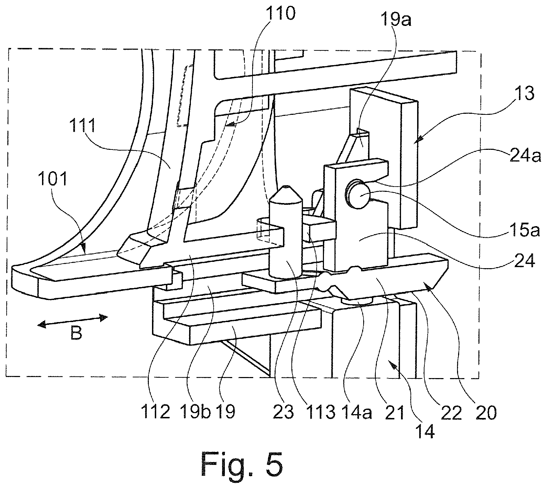

Anhand der Figuren 4 und 5 wird eine Betätigung des Haushaltsgeräts 100 durch eine Bewegung des Betätigungsknopfs 110 anschaulich dargestellt.

In Fig. 4 befindet sich der Betätigungsknopf 110 in der Ausgangsstellung. Wenn durch eine Bewegung des Betätigungsknopfs 110 in den Betätigungsrichtungen B der Betätigungsknopf 110 in Richtung der Platine 13 bewegt wird, bedingt diese Bewegung des Betätigungsknopfs 110 eine Mitnahme des Betätigungselements 20. Hierbei wird nach einem bestimmten Weg des Betätigungselements 20 entlang des Führungsabschnitts 19b die Schaltkomponente 14a des Hauptschalters 14 betätigt, sodass der Motor 12 des Haushaltsgeräts 100 gestartet wird.

Durch eine weitere Bewegung des Betätigungsknopfs 110, und somit des Betätigungselements 20, in den Betätigungsrichtungen B wird ferner die Schaltkomponente 15a des Potentiometers bewegt, sodass eine Verstellung der Drehzahl des Motors 12 vorgenommen wird.

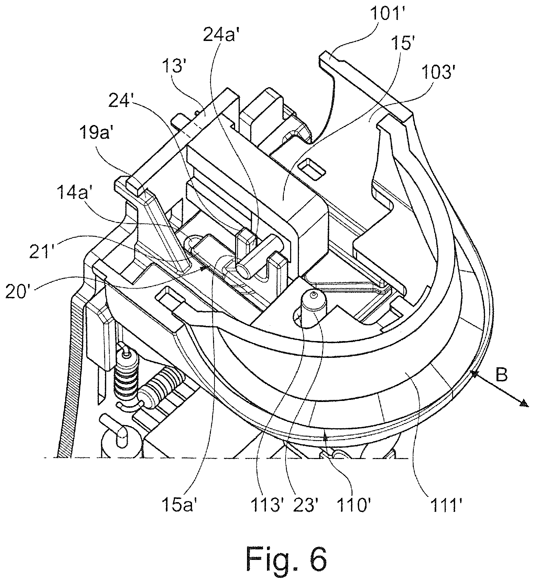

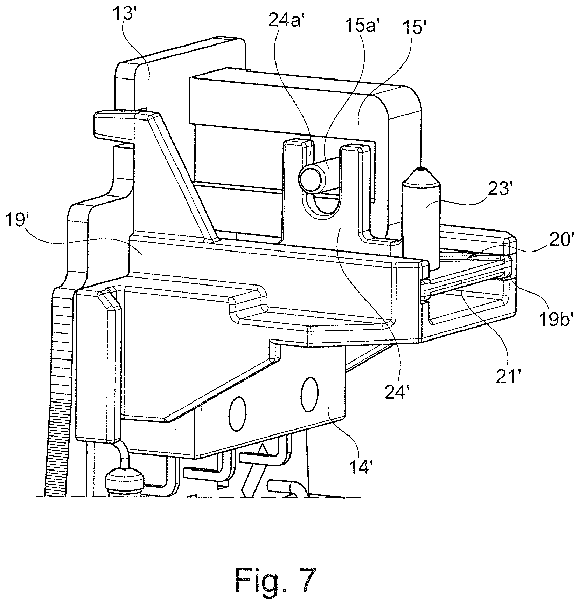

Anhand der Figuren 6-7 wird eine zweite Ausführungsform näher erläutert. Die in den Figuren 6-7 dargestellte Ausführungsform kann ähnlich wie die erste Ausführungsform in einem Haushaltsgerät 100 gemäß den Figuren 1-2 vorgesehen sein. Die entsprechenden Komponenten sind mit ähnlichen Bezugszeichen versehen. Insbesondere umfasst das Haushaltsgerät der zweiten Ausführungsform einen Gehäusekörper 101', in dem eine Platine 13' aufgenommen ist.

Das Gehäuse 101' ist bevorzugt wie das Gehäuse 101 der ersten Ausführungsform ausgebildet, so dass zur Beschreibung des Gehäuses 101' und dessen Komponenten auf die Erläuterungen zum Gehäuse 101 der ersten Ausführungsform verwiesen wird.

Die zweite Ausführungsform unterscheidet sich im Wesentlichen dadurch von der ersten Ausführungsform, dass ein Eingriffsabschnitt 24' einen Aufnahmebereich 24a' aufweist, der in einer zur Montagerichtung M parallelen Dimension geöffnet ist. Somit kann eine Schaltkomponente 15a' eines Potentiometers 15' beim Einführen in der Montagerichtung M (siehe beispielsweise auch Fig. 2) in den Aufnahmebereich 24a' des Eingriffsabschnitts 24' eingeführt werden. Im stehenden Zustand des Haushaltsgeräts ist der Aufnahmebereich 24a' somit nach oben geöffnet. Weitere Komponenten sind ähnlich zur ersten Ausführungsform ausgeführt, so dass auch auf die vorangegangenen Erläuterungen verwiesen wird.

Insbesondere ist an der Platine 13' eine Basis 19' fixiert. Die Basis 19' weist einen Führungsabschnitt 19b' auf, der eine u-förmige Aussparung in der Basis 19' ausbildet. Der Führungsabschnitt 19b' erstreckt sich senkrecht zur Montagerichtung M. Auch diesbezüglich wird auf die Erläuterungen zur ersten Ausführungsform verwiesen.

Im Führungsabschnitt 19b' ist ein Betätigungselement 20' aufgenommen, wobei das Betätigungselement 20' entlang der Führung 19b' in einer Betätigungsrichtungen B hin- und her bewegbar ist.

Das Betätigungselement 20' umfasst eine Betätigungselementbasis 21', an deren in Richtung eines Hauptschalters 14', der ähnlich wie in Fig. 4 der ersten Ausführungsform angeordnet ist, weisenden Seite ein Gleitabschnitt vorgesehen ist. Der in den Figuren der zweiten Ausführungsform nicht dargestellte Gleitabschnitt ist wie in Fig. 4 der ersten Ausführungsform ausgebildet. Der Gleitabschnitt ist entlang der Führung und in Richtung einer ersten Schaltkomponente 14a' des Hauptschalters 14' bewegbar. Im Zuge dieser Bewegung kann das Betätigungselement 20' die Schaltkomponente 14a' auslösen und somit den Hauptschalter 14' aktivieren.

Ferner umfasst das Betätigungselement 20' einen Vorsprungabschnitt 23', der sich ausgehend von der Betätigungselementbasis 21' senkrecht zur durch die Betätigungselementbasis 21' ausgebildete Ebene erstreckt (entsprechend der zuvor genannten Montagerichtung M). Die von der Betätigungselementbasis 21' weg weisende Spitze des Vorsprungabschnitts 23' ist bevorzugt kegelförmig ausgebildet sein, um die Montage weiter zu erleichtern.

Der Vorsprungabschnitt 23' ist im Ausführungsbeispiel zylindrisch ausgebildet. Gemäß einer weiteren Modifikation kann der Vorsprungabschnitt 23' jedoch auch eine andere Geometrie aufweisen, wie eine im Querschnitt rechteckige oder quadratische Gestalt.

Ausgehend von der Betätigungselementbasis 21' erstreckt sich der Eingriffsabschnitt 24'. Der Eingriffsabschnitt 24' ist an der Betätigungselementbasis 21' näher zur Platine 13' ausgebildet als der Vorsprungabschnitt 23'. Der Aufnahmebereich 24a' ist von der Betätigungselementbasis 21' weg weisend geöffnet, wobei der Aufnahmebereich 24a' zur Aufnahme der Schaltkomponente 15a' des Potentiometers 15' vorgesehen ist.

Im Öffnungsbereich 103' ist der Betätigungsknopf 110' derart eingesetzt, dass die gabelförmige Ausnehmung 113' des Betätigungsknopfs 110' den Vorsprungabschnitt 23' aufnimmt. Da sich der Vorsprungabschnitt 23' durch die gabelförmige Ausnehmung 113' des Betätigungsknopfs 110' erstreckt, ist es möglich, bei der Montage Toleranzen im Bereich des Betätigungsknopfs 110' auszugleichen. Der Toleranzausgleich erfolgt hierbei sowohl in der Montagerichtung M als auch in einer Richtung, die in der Ebene der oberen Seite des Betätigungselements 20' liegt.

In Fig. 6 befindet sich der Betätigungsknopf 110' der zweiten Ausführungsform in einer Ausgangsstellung. Wenn der Betätigungsknopf 110' in Richtung der Platine 13 bewegt wird, bedingt diese Bewegung des Betätigungsknopfs 110' eine Mitnahme des Betätigungselements 20' in entsprechender Richtung. Hierbei wird nach einem bestimmten Weg des Betätigungselements 20' entlang des Führungsabschnitts 19b' die Schaltkomponente 14a' des Hauptschalters 14' betätigt, sodass der Motor des Haushaltsgeräts gestartet wird.

Durch eine weitere Bewegung des Betätigungsknopfs 110', und somit des Betätigungselements 20', in den Betätigungsrichtungen B wird ferner die Schaltkomponente 15a' des Potentiometers bewegt, sodass eine Verstellung der Drehzahl des Motors vorgenommen wird.

Es ist ersichtlich, dass Merkmale der ersten und zweiten Ausführungsform miteinander kombiniert werden können, um weitere Ausführungsformen auszubilden.

Obwohl die vorliegende Erfindung im Rahmen eines Stabmixers beschrieben wurde, ist ersichtlich, dass das Haushaltsgerät 100 auch als Handrührgerät, als Pürierstab oder dergleichen ausgebildet sein kann.

## Patentansprüche

1. Betätigungseinheit für ein Haushaltsgerät (100), aufweisend:
eine Platine (13, 13'), wobei an der Platine (13, 13') ein erstes Schaltelement (14, 14') vorgesehen ist,
einen Betätigungsknopf (110, 110') mit einer, insbesondere als Langloch ausgebildeten, Ausnehmung (113, 113'),
ein Betätigungselement (20, 20') mit einer Betätigungselementbasis (21, 21'),
wobei das Betätigungselement (20, 20') einen sich von der Betätigungselementbasis (21, 21') erstreckenden Vorsprungabschnitt (23, 23') aufweist, **dadurch gekennzeichnet, dass** der Vorsprungabschnitt (23, 23') derart in die Ausnehmung (113, 113') des Betätigungsknopfs (110, 110') eingeführt ist, dass das Betätigungselement (20, 20') und der Betätigungsknopf (110, 110') im montierten Zustand in einer Richtung entsprechend der Erstreckung des Vorsprungabschnitts (23, 23') und einer weiteren Richtung jeweils einen Freiheitsgrad aufweisen.

2. Betätigungseinheit gemäß Anspruch 1, **dadurch gekennzeichnet, dass** das Betätigungselement (20, 20') einen Gleitabschnitt (22) aufweist, wobei der Gleitabschnitt (22) eingerichtet ist, durch eine Gleitbewegung eine Schaltkomponente (14a, 14a') des ersten Schaltelements (14, 14') zu betätigen.

3. Betätigungseinheit gemäß einem der vorangegangenen Ansprüche, **dadurch gekennzeichnet, dass** sich der Vorsprungabschnitt (23, 23') von einer zum Gleitabschnitt (22) entgegengesetzten Seite des Betätigungselements (20, 20') erstreckt.

4. Betätigungseinheit gemäß einem der vorangegangenen Ansprüche, **dadurch gekennzeichnet, dass** der Vorsprungabschnitt (23, 23') als zylinderförmiger Stift ausgebildet ist.

5. Betätigungseinheit gemäß einem der vorangegangenen Ansprüche, **dadurch gekennzeichnet, dass** das Betätigungselement (20, 20') einen Eingriffsabschnitt (24, 24') aufweist, wobei sich der Eingriffsabschnitt (24, 24') von der Betätigungselementbasis (21) erstreckt und einen Aufnahmebereich (24a, 24a') zur Aufnahme einer Schaltkomponente (15a) eines zweiten Schaltelements (15, 15') aufweist.

6. Betätigungseinheit gemäß Anspruch 5, **dadurch gekennzeichnet, dass** sich der Eingriffsabschnitt (24, 24') in der gleichen Richtung von der Betätigungselementbasis (21, 21') erstreckt wie der Vorsprungabschnitt (23, 23').

7. Betätigungseinheit gemäß Anspruch 5 oder 6, **dadurch gekennzeichnet, dass** der Aufnahmebereich (24a) in einer Betätigungsrichtung (B) geöffnet ist, um die Schaltkomponente (15a) des zweiten Schaltelements (15) aufzunehmen.

8. Betätigungseinheit gemäß einem der vorangegangenen Ansprüche, ferner umfassend eine an der Platine (13, 13') angebrachte Basis (19, 19'), wobei die Basis (19, 19') einen Führungsabschnitt (19b, 19b') aufweist,
wobei bevorzugt ist, dass der Führungsabschnitt (19b, 19b') der Basis (19, 19') eine sich in Betätigungsrichtung (B) erstreckende Ausnehmung ist, in der die Betätigungselementbasis (21, 21') abschnittsweise aufgenommen ist.

9. Betätigungseinheit gemäß Anspruch 8, **dadurch gekennzeichnet, dass** die Basis (19, 19') zumindest einen Verbindungsabschnitt (19a, 19a') aufweist, der in eine Öffnung der Platine (13, 13') eingeführt ist.

10. Betätigungseinheit gemäß einem der vorangegangenen Ansprüche, **dadurch gekennzeichnet, dass** die zwei Freiheitsgrad-Richtungen des Betätigungselements (20, 20') und des Betätigungsknopfs (110, 110') senkrecht zur Betätigungsrichtung (B) des Betätigungsknopfs (110, 110') ausgerichtet sind.

11. Betätigungseinheit gemäß einem der vorangegangenen Ansprüche, **dadurch gekennzeichnet, dass** an der Platine (13, 13') ein Potentiometer vorgesehen ist.

12. Betätigungseinheit gemäß Anspruch 1, **dadurch gekennzeichnet, dass** das Betätigungselement (20, 20') eingerichtet ist, das erste Schaltelement (14, 14') und ein zweites an der Platine vorgesehenes Schaltelement (15, 15') zu betätigen.

13. Haushaltsgerät (100), umfassend einen Gehäusekörper (101, 101') sowie Betätigungseinheit gemäß einem der vorangegangenen Ansprüche, wobei der Betätigungsknopf (110, 110') zum Betätigen eines Motors (12) des Haushaltsgeräts in einem Öffnungsbereich (103) des Gehäusekörpers (101, 101') aufgenommen ist.

14. Haushaltsgerät (100) gemäß Anspruch 13, **dadurch gekennzeichnet, dass** das Haushaltsgerät ein Stabmixer, ein Rührgerät oder ein Pürierstab ist.

15. Verfahren zur Montage eines Haushaltsgeräts (100), insbesondere eines Haushaltsgeräts gemäß einem der Ansprüche 13-14, wobei:
eine Platine (13, 13'), die mit einem ersten Schaltelement (14, 14') und einem Betätigungselement (20, 20') versehen ist, in einen Gehäusekörper (101, 101') eingeführt wird, wobei das Betätigungselement (20, 20') einen sich von der Betätigungselementbasis (21, 21') erstreckenden Vorsprungabschnitt (23, 23') aufweist, und
der Vorsprungabschnitt (23, 23') in eine, insbesondere gabelförmige, Ausnehmung (113, 113') eines Betätigungsknopfs (110, 110') eingeführt wird,
wobei das Betätigungselement (20, 20') und der Betätigungsknopf (110, 110') im montierten Zustand in einer Richtung entsprechend der Erstreckung des Vorsprungabschnitts (23, 23') und einer weiteren Richtung jeweils einen Freiheitsgrad aufweisen, so dass das Betätigungselement (20, 20') und der Betätigungsknopf (110, 110') bei der Montage in zwei Richtungen relativ zueinander ausgerichtet werden können.

## Claims

1. Actuation unit for a household appliance (100), comprising:
a circuit board (13, 13'), wherein a first switch element (14, 14') is provided on the circuit board (13, 13'),
an actuation button (110, 110') with a recess (113, 113'), in particular in the form of a slot,
an actuation element (20, 20') with an actuation element base (21, 21'),
wherein the actuation element (20, 20') has a projecting section (23, 23) extending from the actuation element base (21, 21'), **characterised in that** the projecting section (23, 23') is introduced into the recess (113, 113') of the actuation button (110, 110') in such a manner that, in the assembled state, the actuation element (20, 20') and the actuation button (110, 110') in each case have a degree of freedom in a direction corresponding to the extension of the projecting section (23, 23') and a further direction.

2. Actuation unit according to claim 1, **characterised in that** the actuation element (20, 20') has a sliding section (22), wherein the sliding section (22) is configured, through a sliding movement, to actuate a switch component (14a, 14a') of the first switch element (14, 14').

3. Actuation unit according to one of the preceding claims, **characterised in that** the projecting section (23, 23') extends from a side of the actuation element (20, 20') opposite the sliding section (22).

4. Actuation unit according to one of the preceding claims, **characterised in that** the projecting section (23, 23') is designed in the form of a cylindrical pin.

5. Actuation unit according to one of the preceding claims, **characterised in that** the actuation element (20, 20') has an engaging section (24, 24'), wherein the engaging section (24, 24') extends from the actuation element base (21), and a receiving region (24a, 24a') for receiving a switch component (15a) of a second switch element (15, 15').

6. Actuation unit according to claim 5, **characterised in that** the engaging section (24, 24') extends from the actuation element base (21, 21') in the same direction as the projecting section (23, 23').

7. Actuation unit according to claim 5 or 6, **characterised in that** the receiving region (24a) is open in an actuation direction (B) in order to receive the switch component (15a) of the second switch element (15).

8. Actuation unit according to one of the preceding claims, further comprising a base (19,19') attached to the circuit board (13, 13'), wherein the base (19, 19') has a guide section (19b,19b'),
wherein it is preferred if the guide section (19b, 19b') of the base (19, 19') is a recess extending in the actuation direction (B) in which the actuation element base (21, 21') is partially received.

9. Actuation unit according to claim 8, **characterised in that** the base (19, 19') has at least one connecting section (19a, 19a') which is introduced into an opening in the circuit board (13, 13').

10. Actuation unit according to one of the preceding claims, **characterised in that** the two directions of the degrees of freedom of the actuation element (20, 20') and of the actuation button (110, 110') are oriented perpendicular to the actuation direction (B) of the actuation button (110, 110').

11. Actuation unit according to one of the preceding claims, **characterised in that** a potentiometer is provided on the circuit board (13, 13').

12. Actuation unit according to claim 1, **characterised in that** the actuation element (20, 20') is configured to actuate the first switch element (14, 14') and a second switch element (15, 15') provided on the circuit board.

13. Household appliance (100), comprising a housing body (101, 101') and an actuation unit according to one of the preceding claims, wherein the actuation button (110, 110') for actuating a motor (12) of the household appliance is accommodated in an opening region (103) of the housing body (101, 101').

14. Household appliance (100) according to claim 13, **characterised in that** the household appliance is a hand mixer, a mixer or a hand blender.

15. Method for assembling a household appliance (100), in particular a household appliance according to one of the claims 13-14, wherein:
a circuit board (13,13'), which is provided with a first switch element (14,14') and an actuation element (20, 20'), is introduced into a housing body (101, 101'), wherein the actuation element (20, 20') has a projecting section (23, 23') extending from the actuation element base (21,21'), and the projecting section (23, 23') is introduced into an in particular fork-shaped recess (113,113) of an actuation button (110,110), wherein, in the assembled state, the actuation element (20, 20') and the actuation button (110, 110') in each case have a degree of freedom in a direction corresponding to the extension of the projecting section (23, 23') and a further direction, so that the actuation element (20, 20') and the actuation button (110, 110') can be oriented in two directions relative to one another during assembly.

## Revendications

1. Unité d'actionnement pour un appareil électroménager (100), présentant :
une platine (13, 13'), dans laquelle un premier élément de commutation (14, 14') est prévu au niveau de la platine (13, 13'),
un bouton d'actionnement (110, 110') avec un évidement (113, 113') réalisé en particulier en tant que trou longitudinal,
un élément d'actionnement (20, 20') avec une base d'élément d'actionnement (21, 21'),
dans laquelle l'élément d'actionnement (20, 20') présente une section en saillie (23, 23') s'étendant depuis la base d'élément d'actionnement (21, 21'), **caractérisée en ce que** la section en saillie (23, 23') est introduite dans l'évidement (113, 113') du bouton d'actionnement (20, 20') de sorte que l'élément d'actionnement (20, 20') et le bouton d'actionnement (110, 110') présentent à l'état monté, dans une direction correspondant à l'étendue de la section en saillie (23, 23') et une autre direction, respectivement, un degré de liberté.

2. Unité d'actionnement selon la revendication 1, **caractérisée en ce que** l'élément d'actionnement (20, 20') présente une section de coulissement (22), dans laquelle la section de coulissement (22) est configurée pour actionner un composant de commutation (14a, 14a') du premier élément de commutation (14, 14') par un mouvement de coulissement.

3. Unité d'actionnement selon l'une quelconque des revendications précédentes, **caractérisée en ce que** la section en saillie (23, 23') s'étend depuis un côté de l'élément d'actionnement (20, 20') opposé à la section de coulissement (22).

4. Unité d'actionnement selon l'une quelconque des revendications précédentes, **caractérisée en ce que** la section en saillie (23, 23') est réalisée en tant que tige cylindrique.

5. Unité d'actionnement selon l'une quelconque des revendications précédentes, **caractérisée en ce que** l'élément d'actionnement (20, 20') présente une section d'engagement (24, 24'), dans laquelle la section d'engagement (24, 24') s'étend à partir de la base d'élément d'actionnement (21) et présente une zone de réception (24a, 24a') pour la réception d'un composant de commutation (15a) d'un second élément de commutation (15, 15').

6. Unité d'actionnement selon la revendication 5, **caractérisée en ce que** la section d'engagement (24, 24') s'étend depuis la base d'élément d'actionnement (21, 21') dans la même direction que la section en saillie (23, 23').

7. Unité d'actionnement selon la revendication 5 ou 6, **caractérisée en ce que** la zone de réception (24a) est ouverte dans une direction d'actionnement (B) pour recevoir le composant de commutation (15a) du second élément de commutation (15).

8. Unité d'actionnement selon l'une quelconque des revendications précédentes, comprenant en outre une base (19, 19') installée au niveau de la platine (13, 13'), dans laquelle la base (19, 19') présente une section de guidage (19b, 19b'), dans laquelle il est préféré que la section de guidage (19b, 19b') de la base (19, 19') soit un évidement s'étendant dans la direction d'actionnement (B), dans lequel la base d'élément d'actionnement (21, 21') est reçue par sections.

9. Unité d'actionnement selon la revendication 8, **caractérisée en ce que** la base (19, 19') présente au moins une section de liaison (19a, 19a') qui est introduite dans une ouverture de la platine (13, 13').

10. Unité d'actionnement selon l'une quelconque des revendications précédentes, **caractérisée en ce que** les deux directions de degré de liberté de l'élément d'actionnement (20, 20') et du bouton d'actionnement (110, 110') sont configurées perpendiculairement à la direction d'actionnement (B) du bouton d'actionnement (110, 110').

11. Unité d'actionnement selon l'une quelconque des revendications précédentes, **caractérisée en ce qu'**un potentiomètre est prévu au niveau de la platine (13, 13').

12. Unité d'actionnement selon la revendication 1, **caractérisée en ce que** l'élément d'actionnement (20, 20') est configuré pour actionner le premier élément de commutation (14, 14') et un second élément de commutation (15, 15') prévu au niveau de la platine.

13. Appareil électroménager (100), comprenant un corps de boîtier (101, 101') ainsi qu'une unité d'actionnement selon l'une quelconque des revendications précédentes, dans lequel le bouton d'actionnement (110, 110') est reçu pour l'actionnement d'un moteur (12) de l'appareil électroménager dans une zone d'ouverture (103) du corps de boîtier (101, 101').

14. Appareil électroménager (100) selon la revendication 13, **caractérisé en ce que** l'appareil électroménager est un mixeur plongeur, un agitateur ou un mélangeur à immersion.

15. Procédé de montage d'un appareil électroménager (100), en particulier d'un appareil électroménager selon l'une quelconque des revendications 13 à 14, dans lequel :
une platine (13, 13') qui est dotée d'un premier élément de commutation (14, 14') et d'un élément d'actionnement (20, 20') est introduite dans un corps de boîtier (101, 101'), dans lequel l'élément d'actionnement (20, 20') présente une section en saillie (23, 23') s'étendant depuis la base d'élément d'actionnement (21, 21'), et
la section en saillie (23, 23') est introduite dans un évidement (113, 113'), en particulier fourchu, d'un bouton d'actionnement (110, 110'),
dans lequel l'élément d'actionnement (20, 20') et le bouton d'actionnement (110, 110') présentent à l'état monté, dans une direction correspondant à l'étendue de la section en saillie (23, 23') et une autre direction, respectivement, un degré de liberté de sorte que l'élément d'actionnement (20, 20') et le bouton d'actionnement (110, 110') peuvent être configurés l'un par rapport à l'autre lors du montage dans deux directions.
